# EUROPEAN PATENT APPLICATION

(11) **EP 1 686 532 A1**
(43) Date of publication of application: **02.08.2006**
(21) Application number: 04819001.1
(22) Date of filing: 19.11.2004
(51) Int. Cl.: G06T 3/40, H04N 1/393, H04N 7/01

(54) **IMAGE PROCESSING APPARATUS, IMAGE PROCESSING PROGRAM, AND READABLE RECORDING MEDIUM**

(30) Priority: 19.11.2003 JP 2003390020
(71) Applicant: SHARP KABUSHIKI KAISHA, Osaka 545-8522 (JP)
(72) Inventor: SAKUTA, Makoto, Nara 6320004 (JP); KOYAMA, Noriyuki, 6190238 (JP)
(74) Representative: Müller - Hoffmann & Partner
(86) International application number: PCT/JP2004/017303
(87) International publication number: WO 2005/050561

(57) **Abstract**

With an image processing device, an image processing program and a computer-readable recording medium, the resolution is converted such that a feature of an original image is not spoiled and the image is not blurred. With an image processing device 1 for converting the resolution of a digital image, an interpolation method corresponding to the position of an interpolation pixel is obtained in accordance with interpolation tables 114a and **115a** which store interpolation information for selecting an interpolation method corresponding to the position of each of the interpolation pixels, and a luminance value of the interpolation pixel is determined using the interpolation method corresponding to the position of the interpolation pixel.

## Description

### TECHNICAL FIELD

The present invention relates to an image processing device usable for an image display device, such as a liquid crystal display device, of an information terminal such as, for example, a cellular phone or a computer terminal; an image processing method using the same; an image processing program for causing a computer to carry out the same; and a computer-readable recording medium having the same recorded thereon. More specifically, the present invention relates to an image processing device capable of performing high speed, high quality resolution conversion processing of an image; an image processing program for causing a computer to carry out the same; and a computer-readable recording medium having the same recorded thereon.

### BACKGROUND ART

As techniques for converting the resolution of an image by digital processing, simple interpolation and linear interpolation are generally known. These methods have advantages and also disadvantages.

Simple interpolation is a technique of converting the resolution by matching the luminance value of each of pixels forming a post-resolution conversion image (hereinafter, referred to as "interpolation pixels") with the luminance value of a pixel on an original image which is closest to the mapping point obtained when the interpolation pixel is mapped on the original image. According to simple interpolation, the luminance value of the original image itself is used. Therefore, there is no blur in the obtained image, and the cost of calculation processing (i.e., the load caused when the calculations required for converting the resolution is performed by an information processing device such as a CPU) is low. However, there are problems that the displayed image has conspicuous jaggy (indentation) and discontinuous edges.

Linear interpolation is a technique for converting the resolution by matching the luminance value of each of pixels forming a post-resolution conversion image (interpolation pixels) with the luminance value which is obtained by linear combination of the luminance values of four pixels on the original image surrounding the mapping point obtained when the interpolation pixel is mapped on the original image (i.e., the sum of products obtained by multiplying each luminance value by a predetermined coefficient). According to linear interpolation, a smooth image is obtained owing to the linear combination, but the blur of the image is conspicuous. Linear combination represents the sum of products obtained by multiplying a plurality of value by a predetermined coefficient.

As a technique for solving these problems, patent document 1, for example, discloses an image enlargement method for enlarging an image smoothly without blurring the outline of the image.

According to this conventional art, different types of interpolation are used for generating interpolation pixels, depending on whether the position of an interpolation pixel to be generated is within a predetermined distance from the original image or not. For example, when the interpolation pixel to be generated is within a predetermined distance from the original image, simple interpolation is used; and when not, linear interpolation is used. In this manner, an image can be enlarged smoothly without blurring the outline of the image.

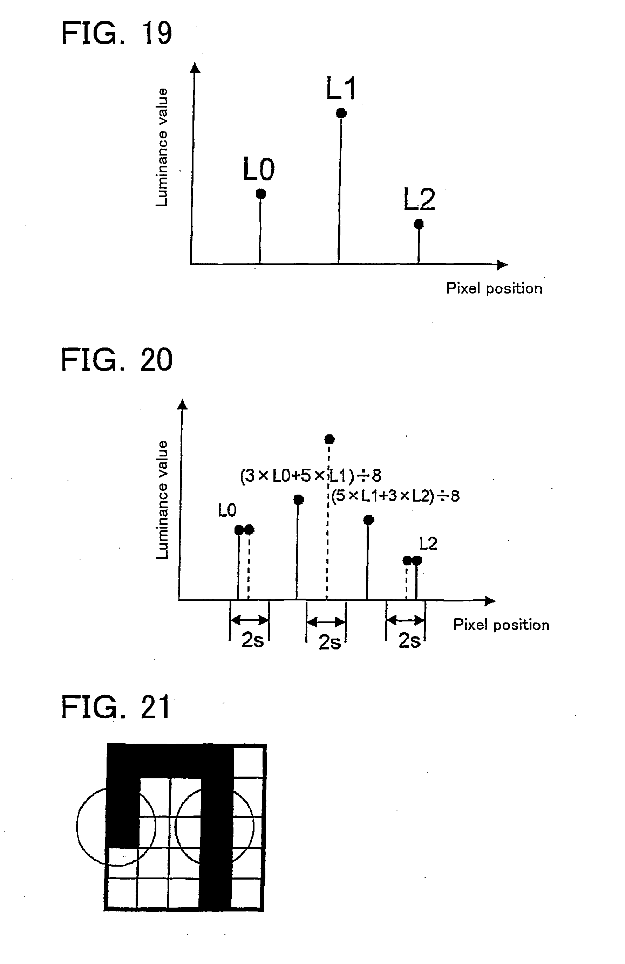

Figure **19** shows the relationship between the position of image data formed of three pixels which are adjacent in the horizontal or vertical direction on a display screen and the luminance value thereof. The horizontal axis represents the position of the coordinates in the horizontal direction on the display screen; and the vertical axis represents the luminance value of each pixel. The three vertical solid lines represented with black circles respectively correspond to the luminance values of the three pixels.

Figure **20** shows a result of enlarging the original image shown in Figure **19** so as to have four pixels in the horizontal or vertical direction by the conventional art disclosed in patent publication 1. Figure **20** diagrammatically shows the luminance values of the adjacent three pixels when enlarged into an image of four pixels. Here, the four vertical solid lines represented with the black circles respectively correspond to the luminance values of the four pixels of the enlarged image. The three vertical dashed lines represented with the black circles respectively correspond to the luminance values of the three pixels of the original image. The expressions shown above the black circles on the solid lines are used for inducing the luminance values of the four pixels of the enlarged image by linear interpolation. L0, L1 and L2 are the luminance values of the pixels of the original image shown in Figure **19.** Here, s is the threshold value of the distance between the interpolation pixel and the original pixel in the original image. Depending on whether the distance between the interpolation pixel and the original pixel is larger than s or not, the type of interpolation is changed. In Figure **19,** s is equal to a half of the inter-pixel distance of the original image. In Figures **19** and **20,** when the number of pixels is increased from three to four, in the case where the distance between the interpolation pixel and the original pixel on the original image is within 2s, interpolation pixels are formed using simple interpolation; and when not, interpolation pixels are formed using linear interpolation. In the case of Figure **20,** the central two interpolation pixels are formed by linear interpolation, and the two interpolation pixels at both ends are formed by simple interpolation.
Patent Publication 1: Japanese Laid-Open Publication No. 11-96348

### DISCLOSURE OF THE INVENTION

### PROBLEMS TO BE SOLVED BY THE INVENTION

However, according to the above-described conventional art, since the type of interpolation is changed only depending on the distance between the interpolation pixel and the original pixel. Therefore, when the above conventional art is applied to an image having an identical shape at a plurality of positions, the shape may be changed depending on the position. As a result, there is a problem that the display quality may be different among enlarged images. The reason is that because the method of interpolation is automatically changed only depending on the threshold value of the distance s between the interpolation pixel and the original pixel as shown in Figure **20,** even pixel patterns having the same shape on the original image may have different shapes on the enlarged image depending on the position.

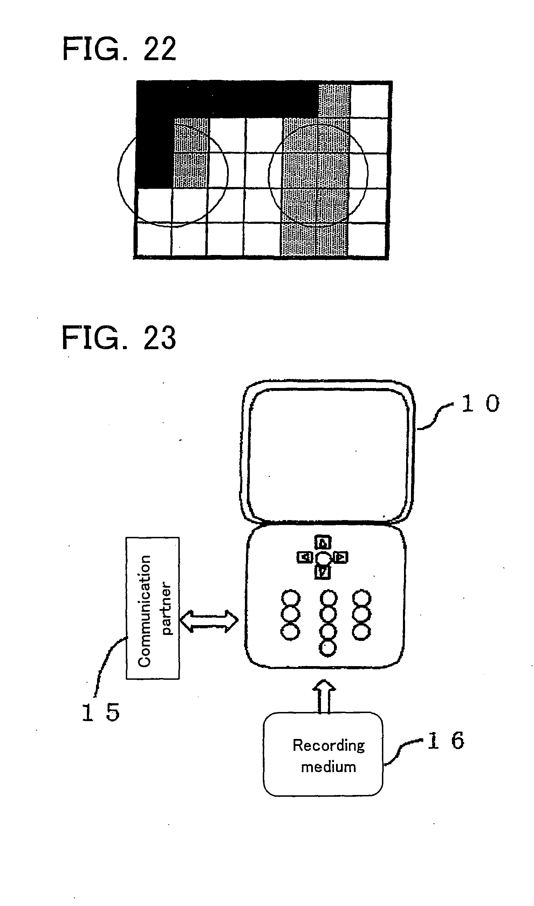

For example, the image shown in Figure **21** includes two line segments having exactly the same line width, one on the right and the other on the left (the segments surrounded by the circles). When the above method is applied to enlarge this image in the horizontal direction, the image shown in Figure **22** is obtained.

As understood from Figure **22,** the width of the two line segments appears different, for the following reason. Since the two line segments are located on different positions in the horizontal direction, the distance s between the interpolation pixel and the original pixel is different between the line segments. Therefore, different types of interpolation are used, which causes a difference in the luminance value representing the line segments.

More specifically, in Figure **22,** the left pixel array of the left vertical line having a width of two pixels are generated by simple interpolation because the distance thereof from the original pixels is equal to or less than the threshold value. By contrast, the right and left pixel arrays on the right also having a width of two pixels are generated by linear interpolation because the distance thereof from the original pixels exceeds the threshold value. Accordingly, the line segments having the same width in the original image are represented as line segments having different luminance values in the enlarged image because the positions thereof are different. In Figure **22,** the luminance value difference is represented by the thickness of the pixels.

When an interpolation method using linear combination, such as linear interpolation, is used for enlarging letter images represented with two, black and white colors as described above, or picture characters, letter images or icons recently used in cellular phones, which are crisp and clear, blur is conspicuous in the obtained images. Therefore, a resolution conversion method which does not cause blur is desired.

However, when simple interpolation or the conventional technique described in patent publication 1 is used for converting the resolution, there are problems that the features of images are lost; for example, (i) the width of the letters or outlines becomes non-uniform, and (ii) images which are partially right-left symmetrical, such as picture characters representing faces, are not right-left symmetrical after resolution conversion. Especially when images such as picture characters or icons are enlarged, the width of line segments used therein become non-uniform depending on the position of the pixels, and the quality of the enlarged images is lowered depending on the contents of the images or the conditions of enlargement. For example, a 20-dot size color picture character having a gradation which is obtained by a cellular phone or the like is enlarged into a 16-dot size or 36-dot size picture character, the non-uniformity of the width of the line segments forming the image is very conspicuous .

The present invention, for solving the problems of the conventional art, has an objective of providing an image processing device for converting the resolution without losing the features of an original image and preventing image blue; an image processing program for causing a computer to carry out the same; and a computer-readable recording medium having the same recorded thereon.

### MEANS FOR SOLVING THE PROBLEMS

An image processing device for converting a resolution of a digital image according to the present invention includes a first memory section for storing a plurality of pieces of image data; an input section for inputting a code specifying first image data from the plurality of pieces of image data stored in the first memory section; a control section for interpolating the first image data to generate second image data having a different resolution; and a second memory section storing at least one interpolation table which holds interpolation information for selecting an interpolation method corresponding to the position of each of interpolation pixels forming a second image by the second image data. The control section refers to one of the at least one interpolation table stored in the second memory section to obtain interpolation information corresponding to the position of each of the interpolation pixels forming the second image, and determines a luminance value of each of the interpolation pixels based on the interpolation method selected in accordance with the obtained interpolation information. By this, the above-described objectives are achieved.

Preferably, the image processing device further includes a third memory section for holding interpolation table designation information representing a content of the interpolation table referred to by the control section in association with the first image data, wherein the control section selects the interpolation table in accordance with the interpolation table designation information associated with the first image data.

Preferably, the control section includes interpolation table correction means capable of correcting a part of the interpolation table.

Preferably, the control section selects the interpolation table based on the resolution of the first image data and the second image data.

Preferably, the second memory section stores a first interpolation table which holds interpolation information representing an interpolation method corresponding to a horizontal position of each of the interpolation pixels forming the second image; and a second interpolation table which holds interpolation information representing an interpolation method corresponding to a vertical position of each of the interpolation pixels forming the second image.

Preferably, the interpolation information includes a type of an interpolation expression for inducing the luminance value of each of the interpolation pixels and a position of each of pixels included in the first image by the first image data which is referred to by the interpolation expression.

Preferably, the control section determines three luminance values representing red, green and blue components of each of the interpolation pixels by an identical interpolation table.

Preferably, the interpolation expression represents an average luminance value of at least two pixels included in the first image data, or a luminance value of one pixel included in the first image data.

Preferably, the interpolation table designation information has an identification number of the interpolation table associated with each conversion resolution.

Preferably, the interpolation expression is a conversion expression in which a luminance value of a pixel adjacent to each of the pixels is to be reflected and is defined as an expression representing a feature of each of the pixels.

Preferably, the second memory section stores a plurality of different horizontal interpolation tables for different combinations of a horizontal resolution of the first image data and a horizontal resolution of the second image data after the resolution conversion, each of the horizontal interpolation tables being stored as the first interpolation table; and the second memory section stores a plurality of different vertical interpolation tables for different combinations of a vertical resolution of the first image data and a vertical resolution of the second image data after the resolution conversion, each of the vertical interpolation tables being stored as the second interpolation table.

Preferably, the interpolation table correction means has means for, when a letter of an original image includes an outline and the width of the entirety of the outline is not within a predetermined range, correcting the interpolation expression number or a reference pixel included in the interpolation table such that the width of the entirety of the outline is within the predetermined range in order to obtain an accurately converted image corresponding to a content of the original image.

Preferably, the interpolation table correction means has means for, when the original image includes an oblique line or a curve and the oblique line or the curve has jaggy of equal to or greater than a predetermined value in a converted image, correcting the interpolation expression number or a reference pixel included in the interpolation table such that the jaggy is of less than the predetermined value in order to obtain an accurately converted image corresponding to a content of the original image.

Preferably, the interpolation table correction means has means for, when the original image includes parts having an identical shape, correcting the interpolation expression number or a reference pixel included in the interpolation table such that the parts having the identical shape have an identical shape in a converted image in order to obtain an accurately converted image corresponding to a content of the original image.

An image processing device for converting a resolution of a digital image according to the present invention includes interpolation method obtaining means for obtaining an interpolation method corresponding to the position of an interpolation pixel in accordance with an interpolation table storing an interpolation method corresponding to the position of each of the interpolation pixel; and luminance value determination means for determining a luminance value of the interpolation pixel using the interpolation method corresponding to the position of the interpolation pixel. By this, the above-described objectives are achieved.

Preferably, the interpolation method obtaining means includes means for obtaining interpolation table designation information corresponding to original image data; means for obtaining a horizontal interpolation table and a vertical interpolation table each as an interpolation table in accordance with a horizontal resolution and a vertical resolution after resolution conversion and the interpolation table designation information; means for obtaining the interpolation method corresponding to the position of the interpolation pixel by referring to the obtained horizontal interpolation table; and means for obtaining the interpolation method corresponding to the position of the interpolation pixel by referring to the obtained vertical interpolation table.

Preferably, the luminance value determination means includes horizontal resolution-converted image generation means for obtaining the original image data and generating a horizontal resolution-converted image by the interpolation method obtained from the horizontal interpolation table as the interpolation table; and vertical resolution-converted image generation means for generating a vertical resolution-converted image by the interpolation method obtained from the vertical interpolation table as the interpolation table.

Preferably, the luminance value determination means includes vertical resolution-converted image generation means for obtaining the original image data and generating a vertical resolution-converted image by the interpolation method obtained from the vertical interpolation table as the interpolation table; and horizontal resolution-converted image generation means for generating a horizontal resolution-converted image by the interpolation method obtained from the horizontal interpolation table as the interpolation table.

In summary, the luminance value determination means includes horizontal resolution-converted image generation means for generating a horizontal resolution-converted image by the interpolation method obtained from the horizontal interpolation table as the interpolation table; and vertical resolution-converted image generation means for generating a vertical resolution-converted image by the interpolation method obtained from the vertical interpolation table as the interpolation table. The vertical resolution-converted image is generated by the vertical resolution-converted image generation means from the horizontal resolution-converted image generated from original image data by the horizontal resolution-converted image generation means, or the horizontal resolution-converted image is generated by the horizontal resolution-converted image generation means from the vertical resolution-converted image generated from the original image data by the vertical resolution-converted image generation means.

Preferably, the horizontal resolution-converted image generation means includes means for obtaining an X coordinate value of a reference pixel of an original image and an interpolation expression number which correspond to an X coordinate value of the interpolation pixel by referring to the horizontal interpolation table; and means for finding the luminance value of the interpolation pixel by substituting the X coordinate value for the interpolation expression corresponding to the interpolation expression number.

Preferably, the vertical resolution-converted image generation means includes means for obtaining a Y coordinate value of a reference pixel of an original image and an interpolation expression number which correspond to a Y coordinate value of the interpolation pixel by referring to the vertical interpolation table; and means for finding the luminance value of the interpolation pixel by substituting the Y coordinate value for the interpolation expression corresponding to the interpolation expression number.

An image processing method according to the present invention using an image processing device for converting a resolution of a digital image includes an interpolation method obtaining step of obtaining an interpolation method corresponding to the position of an interpolation pixel in accordance with an interpolation table which stores an interpolation method corresponding to each of interpolation pixels; and a luminance value determination step of determining a luminance value of the interpolation pixel using the interpolation method corresponding to the position of the interpolation pixel.

Preferably, the interpolation method obtaining step includes a step of obtaining interpolation table designation information corresponding to original image data; a step of obtaining a horizontal interpolation table and a vertical interpolation table each as an interpolation table in accordance with a horizontal resolution and a vertical resolution after resolution conversion and the interpolation table designation information; a step of obtaining the interpolation method corresponding to the position of the interpolation pixel by referring to the obtained horizontal interpolation table; and a step of obtaining the interpolation method corresponding to the position of the interpolation pixel by referring to the obtained vertical interpolation table.

Preferably, the luminance value determination step includes a horizontal resolution-converted image generation means for obtaining the original image data and generating a horizontal resolution-converted image by the interpolation method obtained from the horizontal interpolation table as the interpolation table; and vertical resolution-converted image generation means for generating a vertical resolution-converted image by the interpolation method obtained from the vertical interpolation table as the interpolation table.

Preferably, the horizontal resolution-converted image generation step includes a step of obtaining an X coordinate value of a reference pixel of an original image and an interpolation expression number which correspond to an X coordinate value of the interpolation pixel by referring to the horizontal interpolation table; and a step of finding the luminance value of the interpolation pixel by substituting the X coordinate value for the interpolation expression corresponding to the interpolation expression number.

Preferably, the vertical resolution-converted image generation step includes a step of obtaining a Y coordinate value of a reference pixel of an original image and an interpolation expression number which correspond to a Y coordinate value of the interpolation pixel by referring to the vertical interpolation table; and a step of finding the luminance value of the interpolation pixel by substituting the Y coordinate value for the interpolation expression corresponding to the interpolation expression number.

Preferably, the image processing method includes a correction step of correcting a part of the interpolation table in accordance with a content of the image in order to obtain an accurately converted image corresponding to a content of the original image.

Preferably, the correction step includes a step of, when a letter of an original image includes an outline and the width of the entirety of the outline is not within a predetermined range, correcting the interpolation expression number or a reference pixel included in the interpolation table such that the width of the entirety of the outline is within the predetermined range.

Preferably, the correction step includes a step of, when the original image includes an oblique line or a curve and the oblique line or the curve has jaggy of equal to or greater than a predetermined value in a converted image, correcting the interpolation expression number or a reference pixel included in the interpolation table such that the jaggy is of less than the predetermined value.

Preferably, the correction step includes a step of, when the original image includes parts having an identical shape, correcting the interpolation expression number or a reference pixel included in the interpolation table such that the parts having the identical shape have an identical shape in a converted image.

An image processing program according to the present invention causes a computer to execute each processing step of the above image processing method. By this, the above-described objectives are achieved.

Namely, an image processing program according to the present invention causes a computer to execute each step of an image processing method using an image processing device for converting a resolution of a digital image. The image processing program causes a computer to execute an interpolation method obtaining step of obtaining an interpolation method corresponding to the position of an interpolation pixel in accordance with an interpolation table which stores an interpolation method corresponding to each of interpolation pixels; and a luminance value determination step of determining a luminance value of the interpolation pixel using the interpolation method corresponding to the position of the interpolation pixel. By this, the above-described objectives are achieved.

Preferably, the image processing program according to the present invention causes a computer to execute, as the interpolation method obtaining step, a step of obtaining interpolation table designation information corresponding to original image data; a step of obtaining a horizontal interpolation table and a vertical interpolation table each as an interpolation table in accordance with a horizontal resolution and a vertical resolution after resolution conversion and the interpolation table designation information; a step of obtaining the interpolation method corresponding to the position of the interpolation pixel by referring to the obtained horizontal interpolation table; and a step of obtaining the interpolation method corresponding to the position of the interpolation pixel by referring to the obtained vertical interpolation table.

Preferably, the luminance determination step includes a horizontal resolution-converted image generation step of generating a horizontal resolution-converted image by the interpolation method obtained from the horizontal interpolation table as the interpolation table; and a vertical resolution-converted image generation step of generating a vertical resolution-converted image by the interpolation method obtained from the vertical interpolation table as the interpolation table. The image processing program according to the present invention causes a computer to execute processing of generating the vertical resolution-converted image by the vertical resolution-converted image generation means from the horizontal resolution-converted image generated from original image data by the horizontal resolution-converted image generation means, or processing of generating the horizontal resolution-converted image by the horizontal resolution-converted image generation means from the vertical resolution-converted image generated from the original image data by the vertical resolution-converted image generation means.

Preferably, the image processing program according to the present invention causes a computer to execute a correction step of correcting a part of the interpolation table in accordance with a content of the image in order to obtain an accurately converted image corresponding to a content of the original image.

A computer-readable recording medium according to the present invention has an image processing program according to the present invention recorded thereon. By this, the above-described objectives are achieved.

Hereinafter, the functions of the present invention provided by the above-described structure will be described.

According to the present invention, in accordance with a condition of the coordinate position determined by mutual locations between pixel coordinates by a coordinate position of each pixel of first image data (original image) before enlargement or reduction (before resolution conversion) in the X axis direction and the Y axis direction and a coordinate position of each pixel (interpolation pixel) of second image data after enlargement or reduction (after resolution conversion) in the X axis direction and the Y axis direction, a conversion expression (interpolation expression), in which a luminance value of a pixel adjacent to each pixel in both the X axis direction and the Y axis direction is to be reflected, is experimentally obtained and defined as an expression representing a feature of each pixel.

Since the resolution can be converted while precisely managing the influence of the adjacent pixel in accordance with the condition of the coordinate position of each pixel, a precisely enlarged or reduced image which cannot be obtained by the conventional enlargement or reduction can be reproduced. The display quality of the first image before the enlargement or reduction can be maintained in the second image after enlargement or reduction. As a result, especially in enlargement or reduction of an image having line segments of a picture character or an icon, non-uniformity in the line width or jaggy can be reduced so as to keep the original display quality. Thus, according to the present invention, an enlarged or reduced image which is crisp and clear and keeps the features of the original image such as uniform outlines, left-right symmetry and up-down symmetry can be displayed.

For example, the type of information expression and the positions of the pixels forming the first image before enlargement or reduction, as interpolation information for selecting an interpolation expression (interpolation method), can be stored the second memory section as a first-order table in the X axis direction (first interpolation table) and a second-order table in the Y axis direction (second interpolation table) for each enlargement or reduction ratio (resolution conversion degree). By managing the interpolation expression based on the interpolation information, the information amount can be reduced and the processing speed can be increased. By storing interpolation table designation information for selecting each interpolation table in the third memory section as another table and thus commonly managing the interpolation information, the information amount can be further reduced. As the interpolation expression, linear combination of luminance values of adjacent pixels can be used, for example. By approximation with a simple interpolation expression such as an average luminance value of at least two adjacent pixels or a luminance value of one pixel, the load on the control section (CPU) can be reduced. By correcting a part of the interpolation table in accordance with the content of the image, a converted image suitable to the content of the image can be obtained.

In the image processing device according to the present invention, when instructed to enlarge or reduce an original image (first image), the control section refers to a first interpolation table and a second interpolation table based on, for example, the resolution of the first image data and the second image data so as to obtain interpolation information corresponding to each pixel. Then, the control section performs enlargement or reduction of the image based on the interpolation method (interpolation expression) selected in accordance with the interpolation information. Thus, one image can be converted into various sizes of high quality images at high speed. Therefore, the present invention is suitable to uses of displaying a plurality of sizes of picture characters or letters in a display device of a terminal device, such as a cellular phone, which has a relatively low information processing capability and a limited memory capacity for images. The present invention is not limited to the uses of information terminal devices such as cellular phones, but is widely applicable to various types of electronic devices as a general resolution conversion technology.

### EFFECT OF THE INVENTION

As described above, according to the present invention, by setting an interpolation method corresponding to the position of an interpolation pixel, the interpolation method can be precisely switched in accordance with the position of the interpolation pixel. Therefore, high speed interpolation processing suitable to a spatial feature of the image can be realized.

According to the conventional art, because the resolution is converted using the luminance value obtained automatically using the same interpolation expression for all the pixels, the obtained image may partially have a problem in terms of display quality. By contrast, according to this example, the interpolation method can be controlled by the position of the pixel. Therefore, high quality resolution conversion suitable for images is possible. Especially, an optimum interpolation method can be determined based on the sensitivity of the human eye and can be saved as the interpolation expression. Thus, precise interpolation processing can be performed at high speed.

The present invention is especially effective when browsing an electronic mail with a picture character in an enlarged or reduced state. The text letters of an electronic mail are always required to have high readability and thus required to be precisely displayed. With conventional art, efforts have been made to always display the text letters precisely. The picture character attached to an electronic mail is characteristically compared with the precise display of the text letters. The information in the electronic mail is usually browsed while being scrolled on the display screen. Thus, high speed is always required for the generation of the letters and picture characters.

By contrast, in the case of a usual image, it is assumed that the entire image is viewed. Since a part thereof is not often enlarged, even if the image quality is poor in such a state, that is not considered as a problem of the original image. The image is not often displayed in a reduced state. Therefore, such usual images are not required to be very precise when enlarged or reduced. Regarding the processing speed, the issue is the speed of obtaining the image. Once the image is obtained, the speed of enlargement or reduction is not required to be high, unlike the case of, for example, the picture character of an electronic mail.

The present invention realizes high quality display by precise processing of the image and high speed enlargement/reduction in the circumstances in which precise display and high speed display are required which are specific to picture characters attached to the electronic mails. The above-mentioned high speed enlargement/reduction is possible even under the physical restrictions of memory capacity or processing speed of the CPU in a compact terminal device such as a cellular phone or a PDA which is required to display such picture characters. This is because a technique of interpolating each pixel based on the information from the interpolation table prepared in advance while minimizing the calculation amount is used for enlarging or reducing an individual image.

Especially in the case of a picture character, the capacity of each table can be very small as long as the enlargement ratio or reduction ratio is limited. Since the memory capacity can be thus small, the resolution conversion technology (enlargement/reduction technology) of the present invention can be suitable to a compact terminal device such as a cellular phone or a PDA. The technology of the present invention is also applicable to the enlargement/reduction technology of usual images other than picture characters, by providing an interpolation table for the enlargement or reduction ratio or selecting an interpolation table which stores interpolation information for selecting an interpolation method for various types of enlargement or reduction from among interpolation tables which store interpolation table designation information as a key element.

Especially according to the present invention, the conversion method of each image is individually and precisely determined on a pixel-by-pixel basis such that the display quality of each image is maintained when enlarged or reduced. Therefore, for example, when an image including the line segments of a picture character or an icon is enlarged, the display quality of the image is not deteriorated due to the non-uniformity in the line width or occurrence of jaggy, unlike the conventional art. Thus , the display quality of the original image can be maintained.

### BRIEF DESCRIPTION OF THE DRAWINGS

Figure **1** is a block diagram illustrating a structure of an important part of an image display device according to an example of the present invention.
Figure **2** show an exemplary structure of a display panel included in a display section shown in Figure **1.**
Figure **3** shows an exemplary structure of a pixel included in the display panel shown in Figure **2.**
Figure **4** shows an exemplary structure of an original image storage section and interpolation table designation information shown in Figure **1.**
Figure **5** shows an exemplary structure of a horizontal interpolation table shown in Figure 1.
Figure **6** shows an exemplary structure of a vertical interpolation table shown in Figure **1.**
Figure **7** shows an exemplary structure of a horizontal interpolation table memory section shown in Figure **1.**
Figure **8** is a flowchart illustrating an operation flow of a CPU shown in Figure **1.**
Figure **9** is a flowchart illustrating processing of generating a horizontal resolution-converted image of Figure **8.**
Figure **10** is a flowchart illustrating processing of generating a vertical resolution-converted image of Figure **8.**
Figure **11** is a flowchart illustrating correction processing for adjusting a line width in the image processing method of Figure **1.**
Figure **12** is a flowchart illustrating correction processing for eliminating jaggy of an oblique line or curve in the image processing method of Figure **1.**
Figure **13** is a flowchart illustrating correction processing for matching the shape of the parts which should have the same shape in the image processing method of Figure **1.**
Figure **14** shows an exemplary original image.
Figure **15** show an exemplary structure of each of a horizontal interpolation table and a vertical interpolation table shown in Figure **1.**
Figure **16(a)** shows an image obtained by enlarging the original image shown in Figure **14** using the horizontal interpolation table shown in Figure **15,** and Figure **16(b)** shows an image obtained by enlarging the original image shown in Figure **14** using the vertical interpolation table shown in Figure **15.**
Figure **17** shows an exemplary structure of a horizontal interpolation table corrected from the horizontal interpolation table shown in Figure 15.
Figure **18(a)** shows an image obtained by enlarging the original image shown in Figure **14** using the horizontal interpolation table shown in Figure **17,** and Figure **18(b)** shows an image obtained by enlarging the original image shown in Figure **14** using the vertical interpolation table shown in Figure **15.**
Figure **19** shows the relationship between the pixel position and the luminance value in the original image.
Figure **20** shows the relationship between the pixel position and the luminance value in the original image shown in Figure **19** and in an image obtained by enlarging the original image by conventional art.
Figure **21** show an exemplary original image.
Figure **22** shows an example of an image obtained by enlarging the original image shown in Figure **21** in the horizontal direction by conventional art.
Figure **23** shows the relationship between the image display device shown in Figure **1** and various peripheral devices for inputting a control program to the image display device.

### DESCRIPTION OF THE REFERENCE-NUMERALS

- 1: Image processing device
- 11: RAM
- 111: Horizontal resolution-converted image memory section
- 112: Conversion resolution memory section
- 113: Image code memory section
- 114: Horizontal interpolation table memory section
- 114a: Horizontal interpolation table
- 115: Vertical interpolation table memory section
- 115a: Vertical interpolation table
- 116: Original image storage section
- 117: Image data memory section
- 117a: Interpolation table designation information
- 12: ROM
- 121: Resolution conversion program
- 13: CPU
- 14: Image data input section
- 2: Display section
- 21: Display panel
- 22: Pixel
- 3: Image code input section
- 10: Image display device
- 15: Communication partner
- 16: Recording medium

### BEST MODE FOR CARRYING OUT THE INVENTION

Hereinafter, an image processing device, an image processing method using the same; an image processing program for causing a computer to carry out the same; and a computer-readable recording medium having the same recorded thereon according to the present invention will be described by way of illustrative examples in which the above are applied to an image display device such as a liquid crystal display device, with reference to the attached drawings.

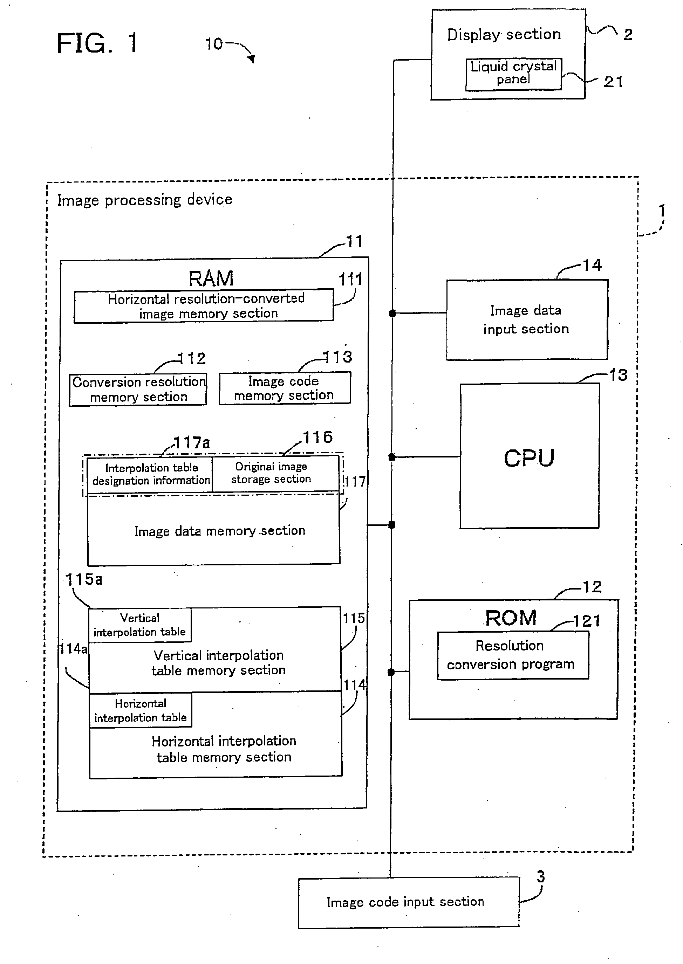

Figure **1** is a block diagram showing a structure of an important part of an image display device according to one example of the present invention.

In Figure **1,** an image display device **10** includes an image processing device 1 which is a resolution conversion device, a display section 2 for displaying image data on a display screen, and an image code input section **3** for inputting an image code.

The image processing device 1 includes a RAM **11** which is a random access memory (hereinafter, referred to as a "RAM"), a ROM **12** as a computer-readable recording medium which is a read only memory (hereinafter, referred to as a "ROM"), a CPU **13** as a control section which is a central processing unit (hereinafter, referred to as a "CPU"), and an image data input section **14** for inputting original image and interpolation table designation information described below. The image processing device **1** is connected to the display section 2 and the image code input section **3.**

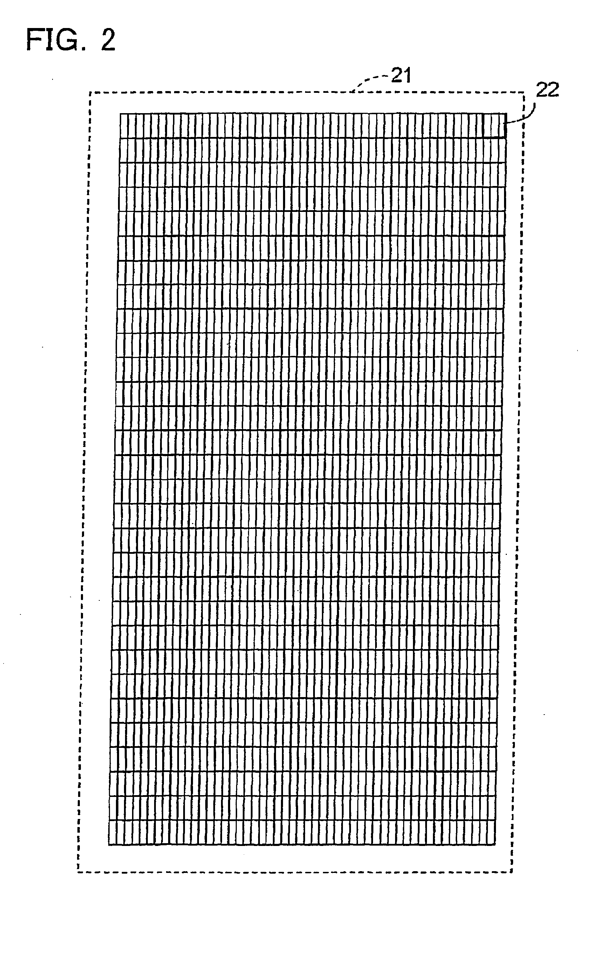

The display section **2** receives an image (second image; hereinafter referred to as a "converted image") obtained by converting the resolution of an original image (first image) by the CPU **13,** and the converted image is displayed on a display panel (display screen) included in the display section **2.** The display section **2** is a display device capable of color display such as, for example, a liquid crystal display, and includes a display panel **21** as shown in Figure **2.** The display panel **21** is formed of a plurality of pixels **22** arranged vertically and horizontally.

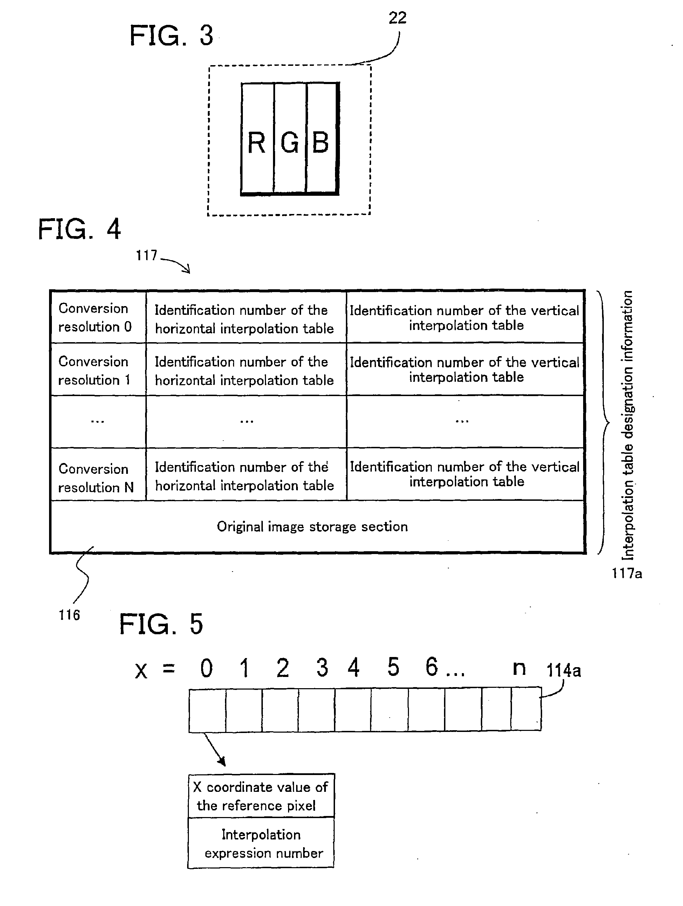

Figure 3 shows a detailed structure of a pixel **22.**

As can be understood from this figure, the pixel **22** is formed of three sub pixels R, G and B which are respectively lit as red (R), green (G) and blue (B). The brightness of each sub pixel is controlled by the luminance value which is output by the CPU **13.**

The image code input section **3** is an input section through which the user can input an image code described below. The image code input section **3** may be any device which includes an interface for allowing the user to input an image code, and may be, for example, a keyboard, a tablet, or a communication device such as a cellular phone, a modem, or an internet card.

The RAM **11** of the image processing device 1 includes a horizontal resolution-converted image memory section **111** for storing an image obtained by converting the horizontal resolution of the original image by the CPU **13** (horizontal resolution-converted image), a conversion resolution memory section **112** for storing the post-conversion resolution, an image code memory section **113** for specifying the original image, the resolution of which is to be converted, a horizontal interpolation table memory section **114** which stores a plurality of horizontal interpolation tables **114a** as first horizontal interpolation tables which are used by the CPU 13 for converting the resolution in the horizontal direction, a vertical interpolation table memory section **115** which stores a plurality of vertical interpolation tables **115a** as second horizontal interpolation tables which are used for converting the resolution in the vertical direction, an original image storage section **116** as a first memory section for storing the original image as a target of resolution conversion, and an image data memory section **117** as a third memory section which stores a plurality of pieces of interpolation table designation information **117a** for designating a horizontal interpolation table **114a** and a vertical interpolation table **115a** to be used for converting the resolution of the original image.

The horizontal interpolation table memory section **114** and the vertical interpolation table memory section **115** form a second memory section which stores a plurality of interpolation tables which store interpolation information for selecting an interpolation method corresponding to the position of each of interpolation pixels.

The present invention is especially suitable to improve the display quality when converting the resolution of images which are crisp and clear, such as icons, picture characters used in cellular phones, and letter images. Therefore, it is assumed that the image used in this example is such a type of image, but the present invention is applicable to general images.

In the conversion resolution memory section **112,** a horizontal resolution (the resolution in the horizontal direction) and a vertical resolution (the resolution in the vertical direction) of a post-conversion image are set before the CPU 13 executes a resolution conversion program **121** stored in the ROM **12.**

In the image code memory section **13,** an image code is set before the CPU **13** executes the resolution conversion program **121.** An image code is an identification number assigned to each of the original images stored in the image data memory section **117.** When the original image, the resolution of which is to be converted, are externally designated among the plurality of original images stored in the image data memory section **117,** the image code corresponding to the original image to be designated is set in the image code memory section **113.** The CPU **13** determines the original image to be read from the image data memory section **117** for resolution conversion by referring to the image code in the image code memory section **113.** In this example, image codes have been input by the user using the image code input section **3.**

The setting in the conversion resolution memory section **112** and the image code memory section **13** may be performed, for example, by the CPU **13** during the execution of an application program, or directly performed by the user via an input device (not shown) connected to the image processing device **1.**

As represented with the dotted line in Figure 1, the image data memory section **117** stores the interpolation table designation information **117a** in association with the original images stored in the original image storage section **116.**

Figure **4** shows one original image storage section **116** stored in the image data memory section **117** shown in Figure **1** and the interpolation table designation information **117a** held in association with the original image stored in the original image storage section **116.**

As shown in Figure **4,** the interpolation table designation information **117a** has an identification number for specifying a horizontal interpolation table **114a** and a vertical interpolation table **115a** which are referred to by the CPU **13** for each of resolution levels (0, 1, ... N) after conversion. By the identification number, a horizontal interpolation table **114a** stored in the horizontal interpolation table memory section **114** and a vertical interpolation table **115a** stored in the vertical interpolation table memory section **115** which are used for converting the resolution of the original image stored in the original image storage section **116** are selected. For example, in the case of the conversion resolution of 0, the identification number of the horizontal interpolation table and the identification number of the vertical interpolation table are determined by the interpolation table designation information, and therefore, the original image stored in the corresponding original image storage section 160 can be output with the conversion resolution of 0.

Figure **5** shows a structure of the horizontal interpolation table **114a** shown in Figure 1.

As shown in Figure 5, the horizontal interpolation table **114a** is data for converting the horizontal resolution of the original image (first image) and for defining the interpolation method corresponding to the position in the horizontal direction (X coordinate value) of each interpolation pixel included in the horizontal resolution-converted image (second image), which is a post-resolution conversion image. The horizontal interpolation table **114a** stores the X coordinate which represents the position of at least one pixel included in at least one reference pixel, which is referred to from the original image when inducing the luminance value of the interpolation pixel by interpolation. The above position is the position in the X direction of the original image, and the horizontal interpolation table **114a** stores the X coordinate for each X coordinate value of the interpolation pixel. The horizontal interpolation table **114a** also stores an interpolation expression number which represents the expression of interpolation (type of interpolation) for inducing the pixel value of the interpolation pixel from the pixel value (luminance value) of the reference pixel.

Figure **5** shows that an X coordinate value of the reference pixel and the interpolation expression number are stored in the horizontal interpolation table **114a** as a set for each of the coordinate values of 0 through n. At each X coordinate value, the position in the horizontal direction for specifying the reference pixel which is referred to in order to find the luminance value of the interpolation pixel based on the pixel included in the original image.

By referring to the horizontal interpolation table **114a,** the X coordinate value of the reference pixel can be determined based on the X coordinate value of the interpolation pixel. This table is used for converting the resolution of the image in the horizontal direction, but does not change the resolution in the vertical direction. For the Y coordinate value of the reference pixel, a Y coordinate value of the interpolation pixel is always used.

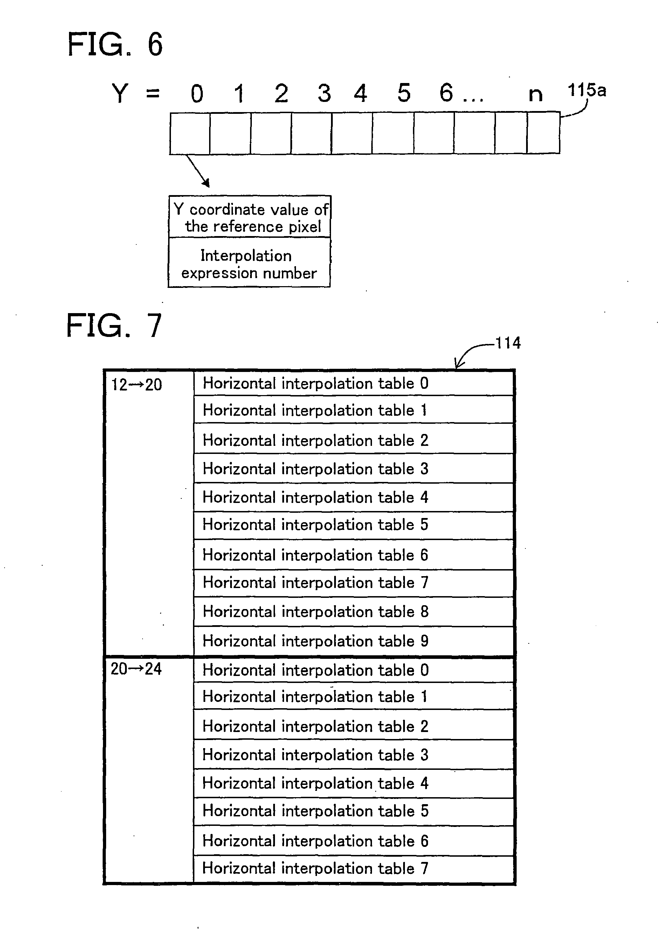

Figure **6** shows a structure of the vertical interpolation table **115a** shown in Figure **1**.

As shown in Figure **6,** the vertical interpolation table **115a** is data for converting the vertical resolution of the original image (first image) and for defining the interpolation method corresponding to the position in the vertical direction (Y coordinate value) of each interpolation pixel included in the vertical resolution-converted image (second image), which is a post-resolution conversion image. The vertical interpolation table **115a** stores the Y coordinate which represents the position of at least one pixel included in at least one reference pixel, which is referred to from the original image when inducing the luminance value of the interpolation pixel by interpolation. The above position is the position in the Y direction of the original image, and the vertical interpolation table **115a** stores the Y coordinate for each Y coordinate value of the interpolation pixel. The vertical interpolation table **115a** also stores an interpolation expression number which represents the expression of interpolation (type of interpolation) for inducing the pixel value of the interpolation pixel from the pixel value (luminance value) of the reference pixel.

Figure **6** shows that a Y coordinate value of the reference pixel and the interpolation expression number are stored in the vertical interpolation table **115a** as a set for each of the coordinate values of 0 through n. At each Y coordinate value, the position in the vertical direction for specifying the reference pixel which is referred to in order to find the luminance value of the interpolation pixel based on the pixel included in the original image.

By referring to the vertical interpolation table 115a, the Y coordinate value of the reference pixel can be determined based on the Y coordinate value of the interpolation pixel. This table is used for converting the resolution of the image in the vertical direction, but does not change the resolution in the horizontal direction. For the X coordinate value of the reference pixel, an X coordinate value of the interpolation pixel is always used.

The position of one pixel in the original image represents the relative position with respect to one particular pixel included in the image. In this example, the position of one pixel in the original image is represented by a set of an X coordinate value on the X axis extending in the horizontal direction of the image and a Y coordinate value on the Y axis extending in the vertical direction of the image. For example, an upper left pixel of the image is the origin, the X coordinate value increases by one as the position is away from the origin rightward by one pixel, and the Y coordinate value increases by one as the position is away from the origin downward by one pixel.

Table 1 shows an example of the correspondence between the interpolation expression number and the interpolation expression.

**Table 1**

| Interpolation No. | Interpolation expression f(x) | Interpolation expression f(y) |
|---|---|---|
| 0 | in(x,y) | in(x,y) |
| 1 | (in(x-1,y)+in(x,y))÷2 | (in(x,y)+in(x,y-1))÷2 |
| 2 | (in(x+1,y)+in(x,y))÷2 | (in(x,y)+in(x,y+1))÷2 |
| 3 | (in(x-1,y)+3×in(x,y))÷4 | (3×in(x,y)+in(x,y-1))÷4 |
| 4 | (3×in(x,y)+in(x+1,y))÷4 | (3×in(x,y)+in(x,y+1))÷4 |

In table 1, x and y respectively represent the X coordinate value of the reference pixel in the original image obtained by the horizontal interpolation table **114a,** and the Y coordinate value of the reference pixel in the original image obtained by the vertical interpolation table **115a.** In Table 1, interpolation expression f(x) is an expression used for converting the horizontal resolution, and interpolation expression f(y) is an expression used for converting the vertical resolution. in(x,y) represents the luminance value of a pixel of the original image which has an X coordinate of x and a Y coordinate of y.

For example, in the process of converting the horizontal resolution, when the luminance value of the interpolation pixel is determined using an interpolation expression having the interpolation number of 0, the luminance value of the reference pixel is obtained as the luminance value of the interpolation pixel.

When the luminance value of the interpolation pixel is determined using an interpolation expression having the interpolation number of 1, an average value of the luminance value of the reference pixel and the luminance value of a pixel adjacent to the reference pixel to the left (luminance average) is obtained as the luminance value of the interpolation pixel.

When the luminance value of the interpolation pixel is determined using an interpolation expression having the interpolation number of 2, an average value of the luminance value of the reference pixel and the luminance value of a pixel adjacent to the reference pixel to the right (luminance average) is obtained as the luminance value of the interpolation pixel.

When the luminance value of the interpolation pixel is determined using an interpolation expression having the interpolation number of 3, a linear combination value of the luminance value of the reference pixel and the luminance value of a pixel adjacent to the reference pixel to the left (luminance average) is obtained as the luminance value of the interpolation pixel.

When the luminance value of the interpolation pixel is determined using an interpolation expression having the interpolation number of 4, a linear combination value of the luminance value of the reference pixel and the luminance value of a pixel adjacent to the reference pixel to the right (luminance average) is obtained as the luminance value of the interpolation pixel.

Similarly, in the process of converting the vertical resolution, when the luminance value of the interpolation pixel is determined using an interpolation expression having the interpolation number of 0, the luminance value of the reference pixel is obtained as the luminance value of the interpolation pixel.

When the luminance value of the interpolation pixel is determined using an interpolation expression having the interpolation number of 1, an average value of the luminance value of the reference pixel and the luminance value of a pixel adjacent to the reference pixel to above (luminance average) is obtained as the luminance value of the interpolation pixel.

When the luminance value of the interpolation pixel is determined using an interpolation expression having the interpolation number of 2, an average value of the luminance value of the reference pixel and the luminance value of a pixel adjacent to the reference pixel to below (luminance average) is obtained as the luminance value of the interpolation pixel.

When the luminance value of the interpolation pixel is determined using an interpolation expression having the interpolation number of 3, a linear combination value of the luminance value of the reference pixel and the luminance value of a pixel adjacent to the reference pixel to above (luminance average) is obtained as the luminance value of the interpolation pixel.

When the luminance value of the interpolation pixel is determined using an interpolation expression having the interpolation number of 4, a linear combination value of the luminance value of the reference pixel and the luminance value of a pixel adjacent to the reference pixel to below (luminance average) is obtained as the luminance value of the interpolation pixel.

In Table 1, the interpolation expression having the interpolation expression number of 0 represents processing of simply substituting a value (using the luminance of one pixel included in the original image as it is). The interpolation expressions having the interpolation expression number of 1 and 2 represent processing of obtaining an average. Generally, the cost of the calculations of such processing by the CPU **13** is low. By frequently using these interpolation expressions, resolution conversion can be performed at high speed.

Figure **7** shows an exemplary structure of the horizontal interpolation table memory section **114** shown in Figure **1.**

As shown in Figure **7,** the horizontal interpolation table memory section **114** stores a plurality of different horizontal interpolation tables **114a** for different combinations of the horizontal resolution of the original image and the horizontal resolution of the post-resolution conversion image. The number shown at the end of each horizontal interpolation table **114a** corresponds to the identification number of the interpolation table with respect to the original image which is held in the image data storage section **116.** In Figure **7, "12 → 20"** represents enlargement of an image having a horizontal resolution of 12 dots to an image having a horizontal resolution of 20 dots. **"20 → 24"** represents enlargement of an image having a horizontal resolution of 20 dots to an image having a horizontal resolution of 24 dots. Thus, the horizontal resolution table **114a** can be changed in accordance with the combination of the resolution of the original image and the resolution of the post-resolution conversion image. When the combination of the resolution levels is changed, the position of the interpolation pixel having the same X coordinate value in the original image is changed. The above setting is performed such that the horizontal interpolation table **114a** can be changed accordingly. The vertical horizontal table memory section **115** has substantially the same structure as that of the horizontal table memory section **114** and the description thereof will be omitted.

The horizontal interpolation table memory section **114** shown in Figure **7** stores a plurality of horizontal interpolation tables **114a.** Alternatively, in order to reduce the capacity used by the RAM **11,** the horizontal interpolation table memory section **114** may store, as information, the difference of one horizontal interpolation table **114a** from the other horizontal interpolation tables **114a,** i . e . , only the part where the combination of the interpolation expression and the X coordinate value of the reference pixel is different. This is also applicable to the vertical information table memory section **115.** Although not shown, the vertical interpolation table **115** stores a plurality of different vertical interpolation tables **115a** for different combinations of the vertical resolution of the original image and the vertical resolution of the post-resolution conversion image.

As described above, when the resolution is converted using the horizontal interpolation table **114a** and the vertical interpolation table **115a,** the original image, the resolution of which is to be converted, and the resolution of the post-resolution conversion image are restricted. In the case of, for example, picture characters used in cellular phones, the size of the letters used is limited, and it arises no problem even if the enlargement or reduction ratio is limited. Therefore, the interpolation table can be easily set. Since the type and content of the picture characters are limited, interpolation tables can be created in advance for each picture character.

In the case where the interpolation expressions are complicated and the load on the CPU 13 for converting the resolution may bring a problem, the interpolation expressions may be approximated with an average value of the luminance values of two pixels adjacent to each other in the original image (luminance average) or with the luminance value of the pixel of the original image. For example, when the resolution in the horizontal direction is converted by referring to the horizontal interpolation table **114a,** the above processing can be performed by limiting the interpolation expression number of each horizontal interpolation table **114a** to 0, 1 or 2. As can be appreciated from the correspondence between the interpolation expression number and the interpolation expression in Table 1, the interpolation expression number 0 corresponds to interpolation expression in(x,y). This represents that approximation with the luminance value of the pixel in the original image. Interpolation expression numbers 1 and 2 respectively correspond to interpolation expressions (in(x-1,y)+in(x,y))÷2 and (in(x+1,y)+in(x,y))÷2. This represents approximation with an average value of two pixels adjacent to each other in the original image.

When the luminance value of the interpolation pixel is obtained only by approximation with the average value of two pixels adjacent to each other (luminance average) in the original image or by approximation with the luminance of the pixel in the original image, an image which is relatively crisp and clear and appears less jaggy can be obtained. This is because use of an average value has an effect of smooth interpolation between adjacent pixels, and use of approximation with the luminance value of the pixel in the original image has an effect of interpolation in a crisp and clear state like the case of simple interpolation.

As described above and shown in Figure **3,** the display section **2** includes pixels **22** each formed of red, blue and green sub pixels R, G and B. The luminance value which is output to the display section 2 by the CPU 13 corresponds to each color R, G or B of the sub pixels. Accordingly, the color of an interpolation pixel corresponding to one pixel is determined by three luminance values of red, green and blue. In order to avoid the color of the interpolation pixel from significantly changing, it is preferable to use the same horizontal interpolation table **114a** and vertical interpolation table **115a** for obtaining the luminance value of any of red, green and blue.

For example, for performing horizontal resolution conversion of an image having a horizontal width of 12 dots into an image having a horizontal width of 20 dots, a particular one of the horizontal interpolation tables **114a** for enlarging conversion of the 12-dot resolution into the 20-dot resolution (one of the upper half of Figure 7) may be used as the horizontal interpolation table to be referred to when inducing the luminance value of red, blue and green of each interpolation pixel.

The image data input section **14** outputs the original image and the interpolation table designation information **117a** to the image data memory section **117** in accordance with the instruction of the CPU **13.** The image data input section **14** may be, for example, a floppy (registered trademark) disc drive for inputting data recorded on a recording medium, or a network card for obtaining data through a network.

The ROM **12** stores the resolution conversion program **121** to be executed for converting the resolution of an image by the CPU **13.**

In this example, the resolution conversion program 121 is stored in the ROM **12,** but may be externally inputtable from a memory device such as, for example, a hard disc and stored in a RAM or the like.

Hereinafter, an operation of the image processing device **1** in this example having the above-described structure will be described.

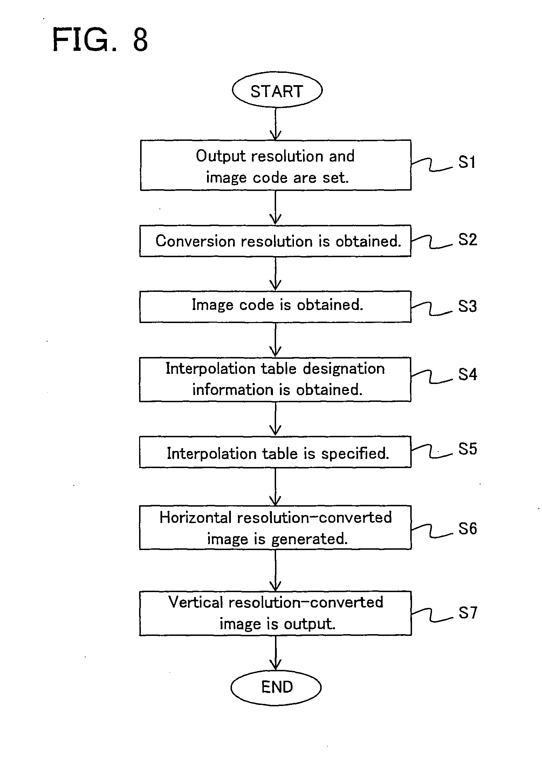

Figure **8** is a flowchart illustrating a flow of operation of the CPU 13 of the resolution conversion program **121** shown in Figure 1. The operation of resolution conversion processing performed by the CPU **13** will be described in detail with reference to Figure **8.**

As shown in Figure **8,** in step S1, an image code of an image (original image), the resolution of which is to be converted, is set in the image code memory section **113.** Also, a horizontal resolution and a vertical resolution representing a desired conversion resolution are set in the conversion resolution memory section **112.** Then, the resolution conversion program **121** is started. In this example, the user inputs the image code using the image code input section 3, and the image code based on the input instruction is stored in the image code memory section **113.** Step S1 is a preparation step for other steps executed by an image display program or the like of converting the resolution of an image using the resolution conversion program 121 and displaying the converted image on the display (display section 2). Step 1 is not included in the operation of the resolution conversion program **121.** Steps S2 et seq. are included in the resolution conversion program **121.**

Next, in step S2, the horizontal resolution and the vertical resolution representing the conversion resolution are obtained from the conversion resolution memory section **112.**

In step S3, the image code is obtained from the image code memory section **113.**

In step S4, the image data memory section **117** is referred to, and thus the interpolation table designation information **117a** corresponding to the original image corresponding to the image code is obtained.

In step S5 , one horizontal interpolation table **114a** and one vertical interpolation table **115a** are obtained respectively from the horizontal interpolation table memory section **114** and the vertical interpolation table memory section **115** in accordance with the horizontal resolution and the vertical resolution after the resolution conversion and the interpolation table designation information **117a.**

Next, in step S6, the original image corresponding to the image code is obtained from the image data memory section **117,** and the horizontal interpolation table **114a** obtained in step S5 is referred to, so as to generate a horizontal resolution-converted image from the original image.

Next, in step S7, a vertical resolution-converted image is generated from the horizontal resolution-converted image using the vertical interpolation table **115a** and output to the display section **2** so as to be displayed on the display panel **21** of the display section **2.** This is the image obtained as a result of the resolution conversion of the original image corresponding to the image code, i.e., the converted image.

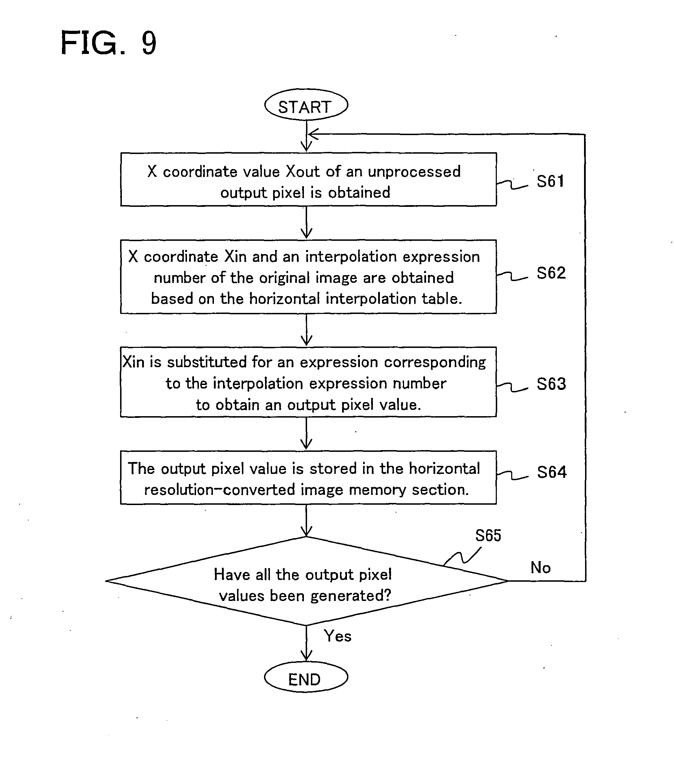

Figure **9** is a flowchart illustrating step S6 in Figure **8** of generating the horizontal resolution-converged image in detail.

As shown in Figure **9,** in step S61, the X coordinate value Xout of the interpolation pixel, the luminance of which is to be induced, is obtained. For example, the X coordinate value and the Y coordinate value of the interpolation pixel, the luminance value of which is to be induced, may be stored in advance in a register (not shown) of the CPU **13.** Then, the X coordinate value of the interpolation pixel can be obtained by referring to the register.

Next, in step S62, the horizontal interpolation table **114a** shown in Figure **5** is referred to, and thus the X coordinate Xin of the reference pixel of the original image corresponding to the X coordinate value of the interpolation pixel and the interpolation expression number are obtained.

Next, in step S63, the X coordinate Xin of the reference pixel is substituted for the interpolation expression corresponding to the interpolation expression number so as to obtain the luminance value of the interpolation pixel.

Next, in step S64, the luminance value of the interpolation pixel obtained in step S63 is stored in the horizontal resolution-converted image memory section **111.** In the horizontal resolution-converted image memory section 111, the luminance value of the interpolation pixel is stored at a position corresponding to the X coordinate value and the Y coordinate value of the interpolation pixel.

Next, in step S65, it is determined whether the luminance values of all the interpolation pixels have been determined or not. When so (YES), the processing is terminated. When not (NO), the processing returns to step S61.

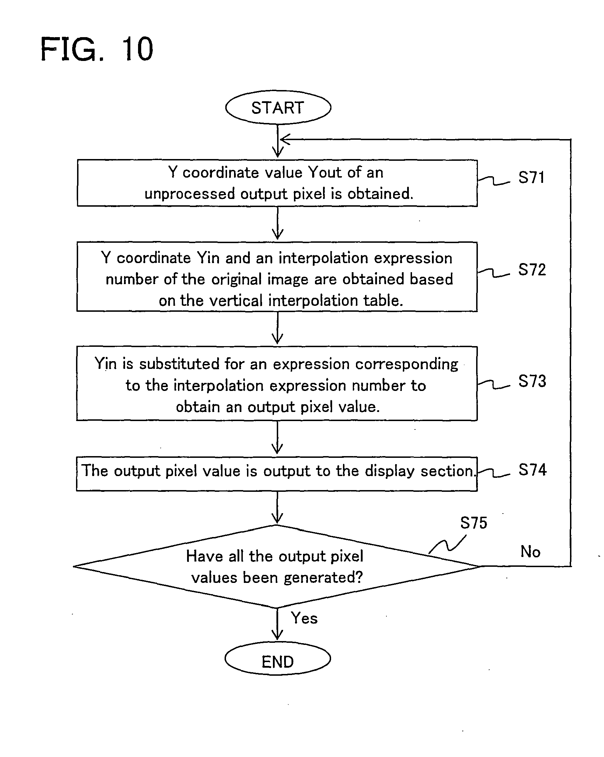

Figure **10** is a flowchart illustrating step S7 in Figure **8** of generating the vertical resolution-converged image in detail.

As shown in Figure **10,** in step S71, the Y coordinate value Yout of the interpolation pixel, the luminance of which is to be induced, is obtained. For example, the X coordinate value and the Y coordinate value of the interpolation pixel, the luminance value of which is to be induced, may be stored in advance in the register (not shown) of the CPU **13.** Then, the Y coordinate value of the interpolation pixel can be obtained by referring to the register.

Next, in step S72, the vertical interpolation table **115a** shown in Figure **6** is referred to, and thus the Y coordinate Yin of the reference pixel of the original image corresponding to the Y coordinate value of the interpolation pixel and the interpolation expression number are obtained.

Next, in step S73, the Y coordinate Yin of the reference pixel is substituted for the interpolation expression corresponding to the interpolation expression number so as to obtain the luminance value of the interpolation pixel.

Next, in step S74, the luminance value of the interpolation pixel obtained in step S73 is output to the display section **2.** In the display section **2,** the luminance value of the interpolation pixel is output to a position corresponding to the X coordinate value and the Y coordinate value of the interpolation pixel.

Next, in step S75, it is determined whether the luminance values of all the interpolation pixels have been determined or not. When so (YES), the processing is terminated. When not (NO), the processing returns to step S71.

The correspondence among the horizontal interpolation table **114a,** the vertical interpolation table **115a,** the interpolation expression number, and the interpolation expression should be created in advance. This may be performed by the operator. Alternatively, the correspondence may be created using an interpolation expression for obtaining the value of each pixel based on a well-known interpolation method such as simple interpolation, linear interpolation or cubic interpolation, and the operator may be correct the correspondence based on the content of the original image. In the case where the operator directly corrects the correspondence among the horizontal interpolation table **114a,** the vertical interpolation table **115a,** the interpolation expression number, and the interpolation expression, there is a disadvantage of being time-consuming but there is also an advantage that a converted image is suitable for the content of the original image because each image is corrected.

Hereinafter, some examples of processing of converting picture characters displayed in a cellular phone will be described as examples of correction of interpolation tables.

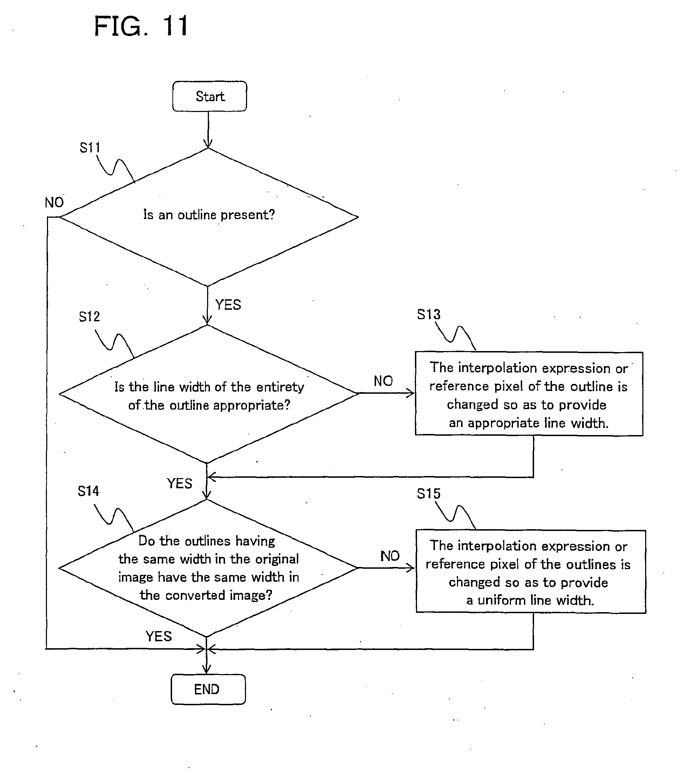

Figure **11** is a flowchart illustrating an example of processing of correcting an interpolation table. The correction is performed for making the outlines of the picture character in the converted image easier to view.

As shown in Figure **11,** in step S11, it is examined whether the original image includes a picture character ornot. When not (NO), the correction is terminated. When the original image includes a picture character (YES), processing goes to step S12.

Next, in step S12, it is examined whether the width of the entirety of outline of the picture character included in the converted image is appropriate or not, for example, whether or not the width is too thin, too thick, or blurred. When the width of the entirety of the outline of the picture character is not appropriate (NO), the processing goes to step 13. When there is no problem, the processing goes to step S14. The criterion by which the line width is determined to be appropriate or not is, for example, the width or the blurring degree of the letters displayed together with the picture character.

Next, in step S13, the interpolation expression number or reference pixel, included in the horizontal interpolation table **114a** or the vertical interpolation table **115a,** which corresponds to an area including the problematic outline detected in step S12 is corrected to adjust such that the width of the outline is appropriate. Then, the processing goes to step S14.

Next, in step S14, it is examined whether or not the outlines having the same width in the original image have the same width in the converted image. When not (NO), the processing goes to step S15. When the width is the same (YES), the correction is terminated.

Next, in step S15, the interpolation expression number of reference pixel included in the horizontal interpolation table **114a** or the vertical interpolation table **115a** is corrected such that the outlines detected in step S14 have the same width.

By the correction in accordance with the above-described procedure, the width of all the outlines in the picture character can be automatically made appropriate so as to eliminate the non-uniformity in the line width.

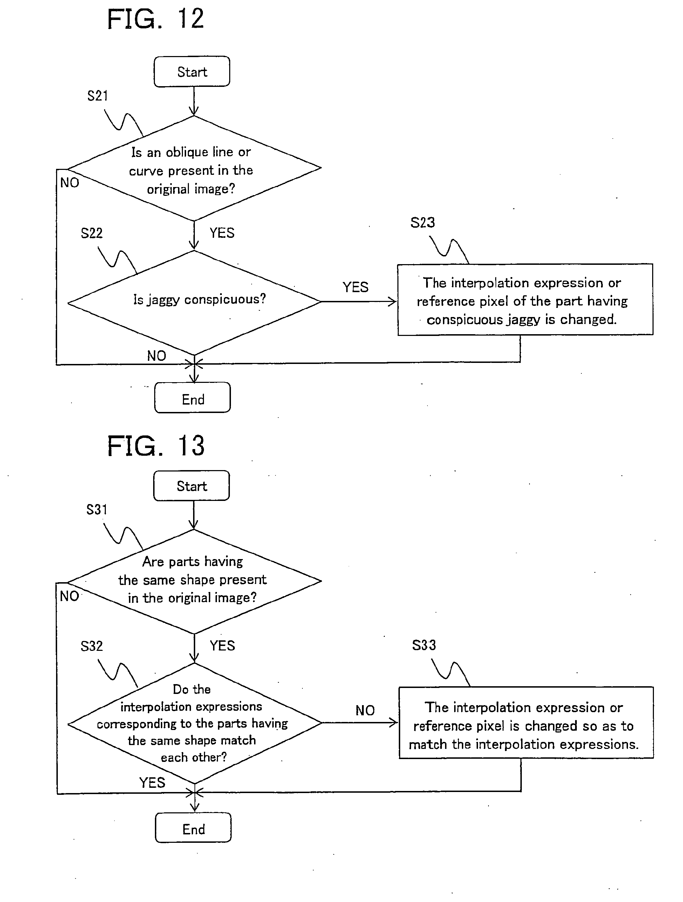

Figure **12** is a flowchart illustrating another example of processing of correcting an interpolation table. The correction is performed for making the oblique lines or curves in the picture character in the converted image easier to view.

As shown in Figure **12,** in step S21, it is examined whether or not the original image includes an oblique line or a curve. When the original image includes no oblique line or curve in the original image (NO), the correction is terminated. When the original image includes an oblique line or a curve (YES), the processing goes to step S22.

Next, in step S22, it is examined whether or not the oblique line or curve detected in step S21 has conspicuous jaggy in the converged image. When the line has conspicuous jaggy in the converted image (YES), the processing goes to step S23 . When there is no conspicuous jaggy (NO), the correction is terminated.

Next, in step S23, the interpolation expression number or reference pixel, included in the horizontal interpolation table **114a** or the vertical interpolation table **115a,** which corresponds to the jaggy part detected in step S22 is corrected so as to eliminate the jaggy. For example, the interpolation expression or the reference pixel is changed so as to blur the jaggy part of the oblique line or curve, so that the position of the pixel forming the oblique line or curve is adjusted.

By the correction in accordance with the above-described procedure, the jaggy of the oblique line or curve included in the picture character can be eliminated. Since this method enables partial correction, it is also possible to blur only a jaggy part, for example.

Figure **13** is a flowchart illustrating still another example of processing of correcting an interpolation table. The correction is performed so that parts having the same shape of the picture character in the original image have the same shape in the converted image.

As shown in Figure **13,** in step S31, it is examined the original image includes parts having the same shape or not. For example, in the case of a picture character representing a human face, two eyes may have the same shape. When the original image includes no parts having the same shape (NO), the correction is terminated. When the original image includes parts having the same shape (YES), the processing goes to step S32.

Next, in step S32, it is examined whether the parts having the same shape detected in step S32 have the same shape in the converted image or not. When so (YES), the correction is terminated. When not (NO), the processing goes to step S33.

Next, in step S33, the interpolation expression number or reference pixel included in the horizontal interpolation table **114a** or the vertical interpolation table **115a** is corrected such that the parts having the same parts detected in step S31 also have the same shape in the converted image.

By the correction in accordance with the above-described procedure, the parts having the same shape in the original image also have the same shape in the converted image.

Hereinafter, an example in which the above-described image processing method is applied to an actual image will be described.

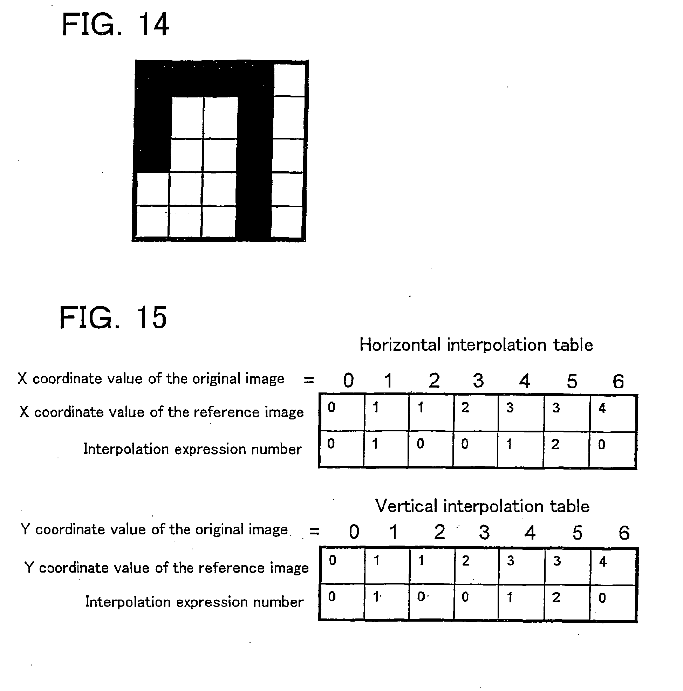

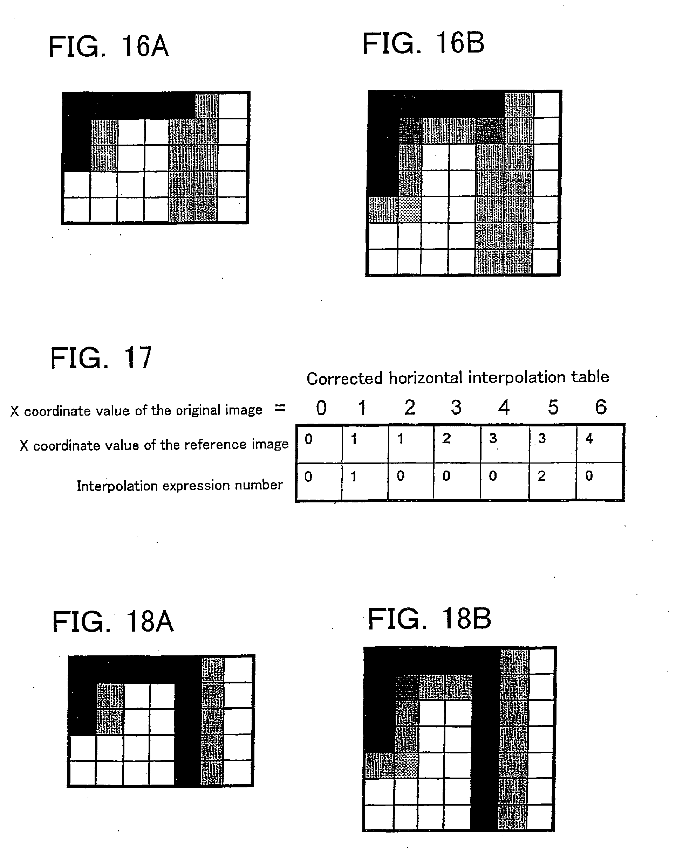

Figure **14** shows an original image, the resolution of which is to be converted. The original image has five pixels both in width and height directions. Figure **15** shows a horizontal interpolation table and a vertical interpolation table allocated for performing resolution conversion of the original image to an image having seven pixel both in the width and height directions. These interpolation tables are crated by approximation such that the interpolation expression obtained by linear interpolation is the luminance value of the reference pixel or the average value of the luminance values of two adjacent reference pixels. Figure **16(a)** shows a horizontal resolution-converted image obtained using the horizontal interpolation table. By further using the vertical interpolation table, the converted image shown in Figure **16(b)** is obtained.

The original image shown in Figure **14** represents the letter of "7". The width of the lines of the letter is one dot. By contrast, in the enlarged converted image shown in Figure **16(b),** the width of the vertical line segment at the left end appears different from the width of the vertical line segment at a position one dot offset from the right end, due to the difference in density.

Figure **17** shows a horizontal interpolation table corrected from the horizontal interpolation table shown in Figure **15** in order to solve the above-described problem. The interpolation expressions are matched to each other such that in the converted image in Figure **16(b),** the luminance value of the pixel array of the letter part at the third column from the right (x = 4) is the same as the luminance value of the pixel array of the letter part at the leftmost column (X = 0). As a result, the image shown in Figure **18(a)** is obtained. By further using the vertical interpolation table **115a,** the image shown in Figure **18(b)** is obtained.

As can be understood from Figure **18(b),** by correcting the interpolation table based on the feature of the original image in Figure **14,** the line widths can be matched to each other.

The correspondence between the interpolation expression and the interpolation expression number in Figures 15 and 17 is the same as that shown in Table 1.

According to the image processing device in this example, by setting an interpolation method corresponding to the position of the interpolation pixel, the interpolation method can be switched precisely in accordance with the position of the interpolation pixel. According to the conventional art, because the resolution is converted using the luminance value obtained automatically using the same interpolation expression for all the pixels, the obtained image may partially have a problem in terms of display quality. By contrast, according to this example, the interpolation method can be controlled by the position of the pixel. Therefore, high quality resolution conversion is possible. Especially, an optimum interpolation method can be determined based on the sensitivity of the human eye or the displayed image, and can be set as the interpolation expression. Thus, precise interpolation processing can be performed at high speed.

Especially in electronic mails for which highly precise display and high speed generation of letters and picture characters are desired, high quality display by precise processing of the image and high speed enlargement and reduction (resolution conversion) can be made possible. Such high speed enlargement and reduction can be possible even under the physical restrictions of memory capacity of a compact terminal device such as a cellular phone or a PDA and the operating speed of the CPU. This is because for performing resolution conversion of each image, the calculation amount is minimized and each pixel can be interpolated based on the information of the interpolation table prepared in advance.

For example, in the case of a picture character, the capacity of the interpolation table can be very small as shown in Table 2 by limiting the enlargement or reduction ratio.

**Table 2**

| | | | | |
|---|---|---|---|---|
| Original image size (number of horizontal dot × number of vertical dot) | 12×12 | 12×12 | 20×20 | 20×20 |
| Converted image size (number of horizontal dot × number of vertical dot) | 16×16 | 16×20 | 24×30 | 30×36 |
| Horizontal interpolation table size (bytes) | 16 | 16 | 24 | 30 |
| Vertical interpolation table size (bytes) | 16 | 20 | 30 | 36 |
| Total interpolation table size (bytes) | 32 | 36 | 54 | 66 |

As can be understood from Table 2, in the case where the size of the original image is 12 dots × 12 dots and the size of the converted image is 16 dots × 16 dots, the size of the horizontal interpolation table is 16 bytes, the size of the vertical interpolation table is 16 bytes, and the total size of the interpolation tables is 32 bytes. In the case where the size of the original image is 12 dots × 12 dots and the size of the converted image is 16 dots × 20 dots, the size of the horizontal interpolation table is 16 bytes, the size of the vertical interpolation table is 20 bytes, and the total size of the interpolation tables is 36 bytes. In the case where the size of the original image is 20 dots × 20 dots and the size of the converted image is 24 dots × 30 dots, the size of the horizontal interpolation table is 24 bytes, the size of the vertical interpolation table is 30 bytes, and the total size of the interpolation tables is 54 bytes. In the case where the size of the original image is 20 dots × 20 dots and the size of the converted image is 30 dots × 36 dots, the size of the horizontal interpolation table is 30 bytes, the size of the vertical interpolation table is 36 bytes, and the total size of the interpolation tables is 66 bytes.

Since the memory capacity can be small as described above, the present invention is suitable to a compact terminal device such as a cellular phone or a PDA. The present invention is also applicable to usual enlargement or reduction other than that of a picture character, by providing an interpolation table for the enlargement or reduction ratio or selecting an interpolation table which stores interpolation information for selecting an interpolation method for various types of enlargement or reduction from among interpolation tables which store interpolation table designation information **117a** as a key element.

Especially, the present invention can set a conversion method (interpolation expression) for image enlargement or reduction on a pixel-by-pixel basis of each image individually and precisely, such that the display quality of each image can be maintained. Therefore, for example, when an image including the line segments of a picture character or an icon is enlarged, the display quality of the image is not deteriorated due to the non-uniformity in the line width or occurrence of jaggy, unlike the conventional art. Thus, the display quality of the original image can be maintained. According to the present invention, an enlarged or reduced image which is crisp and clear and keeps the features of the original image such as uniform outlines, left-right symmetry and up-down symmetry can be displayed.

In the above example, the original image is enlarged. It is also possible to reduce an original image using substantially the same technique.

Although not specifically described in the above example, based on the resolution conversion program 121 in the ROM 12 as the computer-readable recording medium, the CPU 13 executes interpolation method obtaining means for obtaining an interpolation method corresponding to the position of an interpolation pixel in accordance with an interpolation table storing an interpolation method corresponding to the position of each of the interpolation pixel; and luminance value determination means for determining a luminance value of the interpolation pixel using the interpolation method corresponding to the position of the interpolation pixel. Based on the resolution conversion program 121, the interpolation method obtaining means executes means for obtaining interpolation table designation information corresponding to original image data; means for obtaining a horizontal interpolation table and a vertical interpolation table each as an interpolation table in accordance with a horizontal resolution and a vertical resolution after resolution conversion and the interpolation table designation information; means for obtaining the interpolation method corresponding to the position of the interpolation pixel by referring to the obtained horizontal interpolation table; and means for obtaining the interpolation method corresponding to the position of the interpolation pixel by referring to the obtained vertical interpolation table. Based on the resolution conversion program 121, the luminance value determination means executes horizontal resolution-converted image generation means for obtaining the original image data and generating a horizontal resolution-converted image by the interpolation method obtained from the horizontal interpolation table as the interpolation table; and vertical resolution-converted image generation means for generating a vertical resolution-converted image by the interpolation method obtained from the vertical interpolation table as the interpolation table. Based on the resolution conversion program 121, the luminance value determination means executes vertical resolution-converted image generation means for obtaining the original image data and generating a vertical resolution-converted image by the interpolation method obtained from the vertical interpolation table as the interpolation table; and horizontal resolution-converted image generation means for generating a horizontal resolution-converted image by the interpolation method obtained from the horizontal interpolation table as the interpolation table. Namely, the vertical resolution-converted image generation means may be operated from the horizontal resolution-converted image generation means, or the horizontal resolution-converted image generation means may be operated from the vertical resolution-converted image generation means.

Based on the resolution conversion program **121,** the horizontal resolution-converted image generation means executes means for obtaining an X coordinate value of a reference pixel of an original image and an interpolation expression number which correspond to an X coordinate value of the interpolation pixel by referring to the horizontal interpolation table; and means for finding the luminance value of the interpolation pixel by substituting the X coordinate value for the interpolation expression corresponding to the interpolation expression number. Based on the resolution conversion program 121, the vertical resolution-converted image generation means executes means for obtaining a Y coordinate value of a reference pixel of an original image and an interpolation expression number which correspond to a Y coordinate value of the interpolation pixel by referring to the vertical interpolation table; and means for finding the luminance value of the interpolation pixel by substituting the Y coordinate value for the interpolation expression corresponding to the interpolation expression number.

Based on the resolution conversion program **121,** the CPU **13** executes an interpolation table correction means for correcting a part of the interpolation table in accordance with a content of the image. Based on the resolution conversion program **121,** as shown in Figure **11,** the interpolation table correction means executes the means for, when a letter of an original image includes an outline and the width of the entirety of the outline is not within a predetermined range, correcting the interpolation expression number or a reference pixel included in the interpolation table such that the width of the entirety of the outline is within the predetermined range in order to obtain an accurately converted image corresponding to a content of the original image. Based on the resolution conversion program **121,** as shown in Figure **12,** the interpolation table correction means executes the means for, when the original image includes an oblique line or a curve and the oblique line or the curve has jaggy of equal to or greater than a predetermined value in a converted image, correcting the interpolation expression number or a reference pixel included in the interpolation table such that the jaggy is of less than the predetermined value in order to obtain an accurately converted image corresponding to a content of the original image. Based on the resolution conversion program **121,** as shown in Figure **13,** the interpolation table correction means executes the means for, when the original image includes parts having an identical shape, correcting the interpolation expression number or a reference pixel included in the interpolation table such that the parts having the identical shape have an identical shape in a converted image in order to obtain an accurately converted image corresponding to a content of the original image.

As described above, the resolution conversion program **121** (each step of the flowcharts in Figures 8 through **13)** is recorded in the ROM **12** shown in Figure **1** as a computer-readable recording medium. Alternatively, the resolution conversion program **121** may be recorded on a compact portable memory device such as any of various types of IC memories, an optical disc (e.g., a CD), a magnetic recording memory (e.g., an FD) or the like as a computer-readable recording medium. In this case, the image display device **10** may read the resolution conversion program **121** from the compact portable memory device using a reading device and then store the resolution conversion program **121** in the RAM so as to be used by the CPU **13.** This will be described below in detail with reference to Figure **23.**

Figure **23** shows the relationship between the image display device **10** shown in Figure **1** and various peripheral devices for inputting a control program to the image display device **10.**

As shown in Figure **23,** the image display device **10,** which is a terminal device, is capable of receiving a control program such as the resolution conversion program **121** according to the present invention using a receiving device or a data reading device from a communication partner 15 and a recording medium **16.** The input control program (processing functions) is stored in the RAM in the image display device **10** (in an executable state) so as to be executed by the CPU **13.**

The communication partner **15** holds a control program such as the resolution conversion program **121** of the present invention. The image display device **10** obtains the control program from the communication partner **15** wirelessly (via, for example, the Internet using a cellular phone, communication with a party in an intranet, optical communication, or communication with various types of devices such as Blue tooth (registered trademark) devices) or in a wired state (via, for example, the Internet using a public telephone line, ADSL, or an optical cable, communication with a party in an intranet, optical communication, or communication with various types of devices). Then, the image display device **10** stores the control program so as to be executed.

The recording medium **16** is a compact portable memory device such as any of various types of IC memories, an optical disc (e.g., a CD), a magnetic recording memory (e.g., an FD) or the like. The recording medium **16** is capable of reading a control program such as the resolution conversion program **121** of the present invention. The read control program is stored in the RAM in the image display device **10** and executed by the CPU **13.**

The present invention has been described by way of preferable examples thereof. It is not intended that the present invention is limited to these examples. It is understood that the scope of the present invention is construed as being only limited by the claims. It is understood that those skilled in the art can work the equivalents of the present invention based on the description of the present invention and the technological common knowledge. The patents, patent applications and documents referred to in this specification are herein incorporated by reference and construed as being specifically described in this specification.

The terms "horizontal" and "vertical" of the horizontal resolution-converted image and the vertical resolution-converted image used herein may correspond to the "horizontal direction" and "vertical direction" or the "row direction" and "column direction".

### INDUSTRIAL APPLICABILITY

In the field of an image processing device usable for an image display device , such as a liquid crystal display device, of a cellular phone device or a computer terminal; an image processing method using the same; an image processing program for causing a computer to carry out the same; and a computer-readable recording medium having the same recorded thereon, the present invention realizes display of an enlarged image which is crisp and clear and keeps the features of the original image such as uniform outlines, left-right symmetry and up-down symmetry can be displayed. Especially according to the present invention, one image can be converted into various sizes of high quality images at high speed. Therefore, the present invention is suitable to uses of displaying a plurality of sizes of picture characters or letters in a display device of a terminal device, such as a cellular phone, which has a relatively low information processing capability and a limited memory capacity for images. The present invention is not limited to the uses of information terminal devices such as cellular phones, but is widely applicable to various types of electronic devices as a general resolution conversion technology.

## Claims

1. An image processing device for converting a resolution of a digital image, the image processing device comprising:
a first memory section for storing a plurality of pieces of image data;
an input section for inputting a code specifying first image data from the plurality of pieces of image data stored in the first memory section;
a control section for interpolating the first image data to generate second image data having a different resolution; and
a second memory section storing at least one interpolation table which holds interpolation information for selecting an interpolation method corresponding to the position of each of interpolation pixels forming a second image by the second image data;
wherein the control section refers to one of the at least one interpolation table stored in the secondmemory section to obtain interpolation information corresponding to the position of each of the interpolation pixels forming the second image, and determines a luminance value of each of the interpolation pixels based on the interpolation method selected in accordance with the obtained interpolation information.

2. An image processing device according to claim 1, further comprising a third memory section for holding interpolation table designation information representing a content of the interpolation table referred to by the control section in association with the first image data, wherein the control section selects the interpolation table in accordance with the interpolation table designation information associated with the first image data.

3. An image processing device according to claim 1, wherein the control section includes interpolation table correction means capable of correcting a part of the interpolation table.

4. An image processing device according to claim 1 or 2, wherein the control section selects the interpolation table based on the resolution of the first image data and the second image data.

5. An image processing device according to claim 1, wherein the second memory section stores:
a first interpolation table which holds interpolation information representing an interpolation method corresponding to a horizontal position of each of the interpolation pixels forming the second image; and
a second interpolation table which holds interpolation information representing an interpolation method corresponding to a vertical position of each of the interpolation pixels forming the second image.

6. An image processing device according to claim 1 or 5, wherein the interpolation information includes a type of an interpolation expression for inducing the luminance value of each of the interpolation pixels and a position of each of pixels included in the first image by the first image data which is referred to by the interpolation expression.

7. An image processing device according to claim 6, wherein the control section determines three luminance values representing red, green and blue components of each of the interpolation pixels by an identical interpolation table.

8. An image processing device according to claim 6 , wherein the interpolation expression represents an average luminance value of at least two pixels included in the first image data, or a luminance value of one pixel included in the first image data.

9. An image processing device according to claim 2, wherein the interpolation table designation information has an identification number of the interpolation table associated with each conversion resolution.

10. An image processing device according to claim 6 or 8, wherein the interpolation expression is a conversion expression in which a luminance value of a pixel adjacent to each of the pixels is to be reflected and is defined as an expression representing a feature of each of the pixels.

11. An image processing device according to claim 5, wherein:
the second memory section stores a plurality of different horizontal interpolation tables for different combinations of a horizontal resolution of the first image data and a horizontal resolution of the second image data after the resolution conversion, each of the horizontal interpolation tables being stored as the first interpolation table; and
the second memory section stores a plurality of different vertical interpolation tables for different combinations of a vertical resolution of the first image data and a vertical resolution of the second image data after the resolution conversion, each of the vertical interpolation tables being stored as the second interpolation table.

12. An image processing device according to claim 3, wherein the interpolation table correction means has means for, when a letter of an original image includes an outline and the width of the entirety of the outline is not within a predetermined range, correcting the interpolation expression number or a reference pixel included in the interpolation table such that the width of the entirety of the outline is within the predetermined range in order to obtain an accurately converted image corresponding to a content of the original image.

13. An image processing device according to claim 3, wherein the interpolation table correction means has means for, when the original image includes an oblique line or a curve and the oblique line or the curve has jaggy of equal to or greater than a predetermined value in a converted image, correcting the interpolation expression number or a reference pixel included in the interpolation table such that the jaggy is of less than the predetermined value in order to obtain an accurately converted image corresponding to a content of the original image.

14. An image processing device according to claim 3, wherein the interpolation table correction means has means for, when the original image includes parts having an identical shape, correcting the interpolation expression number or a reference pixel included in the interpolation table such that the parts having the identical shape have an identical shape in a converted image in order to obtain an accurately converted image corresponding to a content of the original image.

15. An image processing device for converting a resolution of a digital image, the image proces sing device comprising:
interpolation method obtaining means for obtaining an interpolation method corresponding to the position of an interpolation pixel in accordance with an interpolation table storing an interpolation method corresponding to the position of each of the interpolation pixel; and
luminance value determination means for determining a luminance value of the interpolation pixel using the interpolation method corresponding to the position of the interpolation pixel.

16. An image processing device according to claim 15, wherein the interpolation method obtaining means includes:
means for obtaining interpolation table designation information corresponding to original image data;
means for obtaining a horizontal interpolation table and a vertical interpolation table each as an interpolation table in accordance with a horizontal resolution and a vertical resolution after resolution conversion and the interpolation table designation information;
means for obtaining the interpolation method corresponding to the position of the interpolation pixel by referring to the obtained horizontal interpolation table; and
means for obtaining the interpolation method corresponding to the position of the interpolation pixel by referring to the obtained vertical interpolation table.

17. An image processing device according to claim 15, wherein the luminance value determination means includes:
horizontal resolution-converted image generation means for generating a horizontal resolution-converted image by the interpolation method obtained from the horizontal interpolation table as the interpolation table; and
vertical resolution-converted image generation means for generating a vertical resolution-converted image by the interpolation method obtained from the vertical interpolation table as the interpolation table;
wherein the vertical resolution-converted image is generated by the vertical resolution-converted image generation means from the horizontal resolution-converted image generated from original image data by the horizontal resolution-converted image generation means, or the horizontal resolution-converted image is generated by the horizontal resolution-converted image generation means from the vertical resolution-converted image generated from the original image data by the vertical resolution-converted image generation means.

18. An image processing device according to claim 17, wherein the horizontal resolution-converted image generation means includes:
means for obtaining an X coordinate value of a reference pixel of an original image and an interpolation expression number which correspond to an X coordinate value of the interpolation pixel by referring to the horizontal interpolation table; and
means for finding the luminance value of the interpolation pixel by substituting the X coordinate value for the interpolation expression corresponding to the interpolation expression number.

19. An image processing device according to claim 17, wherein the vertical resolution-converted image generation means includes:
means for obtaining a Y coordinate value of a reference pixel of an original image and an interpolation expression number which correspond to a Y coordinate value of the interpolation pixel by referring to the vertical interpolation table; and
means for finding the luminance value of the interpolation pixel by substituting the Y coordinate value for the interpolation expression corresponding to the interpolation expression number.

20. An image processing program for causing a computer to execute each of steps of an image processing method using an image processing device for converting a resolution of a digital image, the image processing program comprising:
interpolation method obtaining step of obtaining an interpolation method corresponding to the position of an interpolation pixel in accordance with an interpolation table which stores an interpolation method corresponding to each of interpolation pixels; and
luminance value determination step of determining a luminance value of the interpolation pixel using the interpolation method corresponding to the position of the interpolation pixel.

21. An image processing program according to claim 20, which causes a computer to execute, as the interpolation method obtaining step:
a step of obtaining interpolation table designation information corresponding to original image data;
a step of obtaining a horizontal interpolation table and a vertical interpolation table each as an interpolation table in accordance with a horizontal resolution and a vertical resolution after resolution conversion and the interpolation table designation information;
a step of obtaining the interpolation method corresponding to the position of the interpolation pixel by referring to the obtained horizontal interpolation table; and
a step of obtaining the interpolation method corresponding to the position of the interpolation pixel by referring to the obtained vertical interpolation table.

22. An image processing program according to claim 20, wherein the luminance determination step includes:
a horizontal resolution-converted image generation step of generating a horizontal resolution-converted image by the interpolation method obtained from the horizontal interpolation table as the interpolation table; and
a vertical resolution-converted image generation step of generating a vertical resolution-converted image by the interpolation method obtained from the vertical interpolation table as the interpolation table;
wherein the image processing program causes a computer to execute processing of generating the vertical resolution-converted image by the vertical resolution-converted image generation means from the horizontal resolution-converted image generated from original image data by the horizontal resolution-converted image generation means, or processing of generating the horizontal resolution-converted image by the horizontal resolution-converted image generation means from the vertical resolution-converted image generated from the original image data by the vertical resolution-converted image generation means.

23. An image processing program according to claim 20, which causes a computer to execute a correction step of correcting a part of the interpolation table in accordance with a content of the image in order to obtain an accurately converted image corresponding to a content of the original image.

24. A computer-readable recording medium having an image processing program according to any one of claims 20 through 23 recorded thereon.
